Europäisches Patentamt

European Patent Office

Office européen des brevets

(11) Publication number : **0 477 129 A1**

(12) # EUROPEAN PATENT APPLICATION

(21) Application number : **91630071.8**

(22) Date of filing : **19.09.91**

(51) Int. Cl.⁵ : **B01D 53/00, B01D 5/00**

(30) Priority : **20.09.90 US 585839**

(43) Date of publication of application :
**25.03.92 Bulletin 92/13**

(84) Designated Contracting States :
**DE FR GB IT**

(71) Applicant : **UNITED TECHNOLOGIES
CORPORATION
United Technologies Building 1, Financial
Plaza
Hartford, CT 06101 (US)**

(72) Inventor : **Trusch, Raymond B.
79 Hayes Road
South Windsor, Connecticut 06074 (US)**
Inventor : **Birbara, Philip J.
52 Elm Street
Windsor Locks, Connecticut 06096 (US)**

(74) Representative : **Waxweiler, Jean et al
OFFICE DENNEMEYER S.à.r.l. P.O. Box 1502
L-1015 Luxembourg (LU)**

(54) Integrated condenser and trace contaminant scrubber.

(57)    An absorbent solution (35, 43) is sprayed over the heat transfer surface (27, 29) in a condensing heat exchanger (20). Gases with an affinity for the absorbent solution and water vapor are then removed from air (10) flowing through the condensing heat exchanger (20).

EP 0 477 129 A1

Jouve, 18, rue Saint-Denis, 75001 PARIS

FIG 2

Technical Field

This invention relates to atmospheric conditioning systems for removing contaminant gases.

Background Art

Since fresh air cannot simply be extracted from the atmosphere surrounding vehicles designed for underwater and outer space applications, one of two techniques must be used to provide a continuous stream of breathable air to occupied living enclosures within these vehicles. The first of these techniques involves continuously replacing any air consumed in the enclosure with air from some stored source. Consumed air is then either re-compressed for later disposal or exhausted outside the enclosure. While this first technique proves adequate for short durations, the amount of air that must be stored to provide sufficient fresh air for missions of any appreciable duration becomes quickly prohibitive.

The second approach, widely used in submarine and space craft applications, involves removing, or scrubbing, all undesirable components from the enclosure air. Greatest among these undesirable components are carbon dioxide and water vapor from human exhalation and perspiration. Additional elements found in trace amounts must also be removed. These include acid gases; such as nitrogen dioxide, sulfur dioxide, and hydrochloric acid; as well as basic gases; such as ammonia and amines; and organic gases; such as alcohols, ketones and esters.

Systems designed to scrub air extracted from the living spaces of underwater and space vehicles must not only then effectively remove a wide variety of contaminant gases, but, as they operate in environments where power and space are limited, be light, small, and energy efficient as well. In addition, systems designed to scrub air in space applications must deliver an acceptable level of performance over a wide range of gravities. This consideration precludes the use in space systems of some components that effectively scrub and dehumidify air on the ground, as these devices often rely on gravity to operate, and must be extensively redesigned to perform in microgravity environments.

U. S. Pat. No. 3,042,497 describes a carbon dioxide scrubbing system for submarine applications. Air extracted from the living space of the submarine is delivered to the uppermost section of an absorbing chamber. A solution sprays through nozzles in this upper section onto a bed of metal shavings suspended at the midsection of the chamber. Air extracted from the submarine cabin flows over these shavings, exiting through an outlet located immediately below the bed. As air passes over the solution on the surface of the metal shavings, carbon dioxide entrained in the air dissolves in the solution. Gravity, given continuous spraying of solution onto the top of the bed, causes the solution to flow to the bottom of the chamber. The solution accumulating in the bottom of this chamber then passes into a recovery circuit, where absorbed carbon dioxide is removed before the solution recirculates to the spray nozzles at the top of the metal shaving bed.

U. S. Pat. No. 3,497,312 also addresses the issue of carbon dioxide removal in submarines. In this patent, carbon dioxide is removed from air extracted from the enclosure as it flows over one of two silver oxide beds. Periodically, flow is switched between the two beds, allowing the off-line bed to be treated to purge absorbed carbon dioxide.

Another application in which an absorbent bed is used to remove carbon dioxide from an airstream is described in U. S. Pat. No. 3,502,429. In this system, an oxide mixture reacts with water, producing both an aqueous basic solution and oxygen gas. Similar to U. S. Pat. No. 3,042,497, the basic solution is then sprayed onto an absorbent bed. As air extracted from the enclosure flows through this bed, both carbon dioxide and trace levels of acid gas in the air dissolve into the basic solution. After exiting the absorbing bed, decontaminated air then mixes with the oxygen gas produced in the oxide mixture/water reaction. This system, then, not only removes carbon dioxide from enclosure air, but replenishes it with oxygen before it recirculates to the enclosure as well.

The use of a basic solution to remove both acid gas contaminants and carbon dioxide from enclosure air is also addressed in U. S. Pat. Nos. 3,970,740 and 4,313,916. In U. S. Pat. 3,970,740, oil refinery exhaust containing acid gas is introduced into a venturi scrubber and sprayed with a basic solution. The acid gases react with and dissolve in the basic solution, decontaminating the exhaust. To ensure that adequate levels of acid gas are removed, the pH of the basic solution entering the scrubber is carefully monitored and maintained at the required level by the addition of a concentrated basic material, such as alkali metal hydroxide. Similarly, in U. S. Pat. 4,313,916, trace levels of acid gases are removed by bringing a contaminated airstream into contact with a solution of alkali/polyhydric alcohol. The acid gases dissolve in this basic solution, decontaminating the flow.

U. S. Pat. No. 3,457,040 discloses a system that operates in microgravity environments to remove carbon dioxide and trace levels of both acid and basic gas contaminants. Air extracted from a space craft cabin is first filtered and then split into two portions. Carbon dioxide is removed from the first portion by passing it over a zeolite bed. The second portion of extracted air flows through a chemisorbent bed. This chemisorbent bed consists of several layers of materials, each chosen to remove a specific contaminant or a group of contaminants. Trace amounts of acid and basic gases are removed by including in this chemisorbent bed layers of lithium hydroxide and acid washed silica gel. Acid gas absorbs into the lithium hydroxide layer, and basic gas into the silica gel layer. Following decontamination, the second portion mixes with the first and recirculates to the cabin.

In U. S. Pat. No. 4,329,320, an industrial process for condensing a gaseous mixture of ammonia, carbon dioxide, and water vapor is discussed. The gaseous mixture first passes through a water-cooled heat exchanger of usual design. The resulting condensed ammonium carbonate solution flows out through the bottom of the heat exchanger, where a portion is extracted and mixed with water. The diluted solution is then sprayed, through nozzles in the upper section of the heat exchanger, over the heat exchanger fins. Spraying the solution over the fins reduces the concentration of the ammonium carbonate solution condensing there. By reducing the concentration of the condensed solution, the formation of solid ammonium carbamate is minimized. This is important, since excessive ammonium carbamate formation reduces the heat transfer capacity of the fins, lowering the condensing capacity of the system.

Disclosure of the Invention

Objects of the present invention include enhancing the soluble contaminant gas scrubbing capability of water vapor condensers.

According to the present invention, an absorbent solution is introduced onto condenser heat transfer surfaces.

For a condenser to be an effective dehumidification tool, air flowing through it must pass over a large heat transfer surface. Absorbant solution introduced onto this surface, as in the present invention, disperses over this heat transfer surface. An air/solution interface of considerable surface area then develops, offering a large reaction area over which contaminant gases, entrained in the air flowing through the condenser, can dissolve into the solution.

In prior art atmospheric conditioning systems, dehumidification and contaminant scrubbing are accomplished by directing airflow through separate components. By employing the present invention, however, these two components are integrated into a single unit. The total number of components needed to effectively deliver dry, decontaminated air is therefore reduced, decreasing the overall volume and mass of the system. Furthermore, elimination of a separate scrubbing component also decreases the length of the air flowpath, reducing the power needed to force air through the system.

Also in the present invention, as water vapor-bearing air flows through the condenser, the vapor condenses on the heat transfer surface, mixing with and diluting the absorbent solution there. The absorbent solution can therefore be stored in highly concentrated, and hence lighter and more compact, form, further reducing the size and weight and of the system.

Condenser configurations known to the prior art also employ some technique, typically spraying, to introduce solutions onto the heat transfer surfaces of a condenser. However, in these configurations, diluted solution is introduced in order to lower the concentration of the condensate forming on the surfaces. Furthermore, the purpose of this practice is to forestall some chemical process. In the present invention, however, a concentrated solution is introduced onto heat transfer surfaces in order to raise the concentration of that solution in the condensate. Additionally, the purpose of this introduction is to initiate, not inhibit, chemical processes.

The foregoing and other objects, features and advantages of the present inventions will become more apparent in the light of the following detailed description of exemplary embodiments thereof, as illustrated in the accompanying drawing.

Brief Description of Drawing

FIG. 1 is a schematic diagram showing a portion of an atmospheric conditioning system incorporating the present invention; and
FIG. 2 is a schematic broken away side view showing the internal structure of a condensing heat exchanger incorporating the present invention.

Best Mode for Carrying Out the Invention

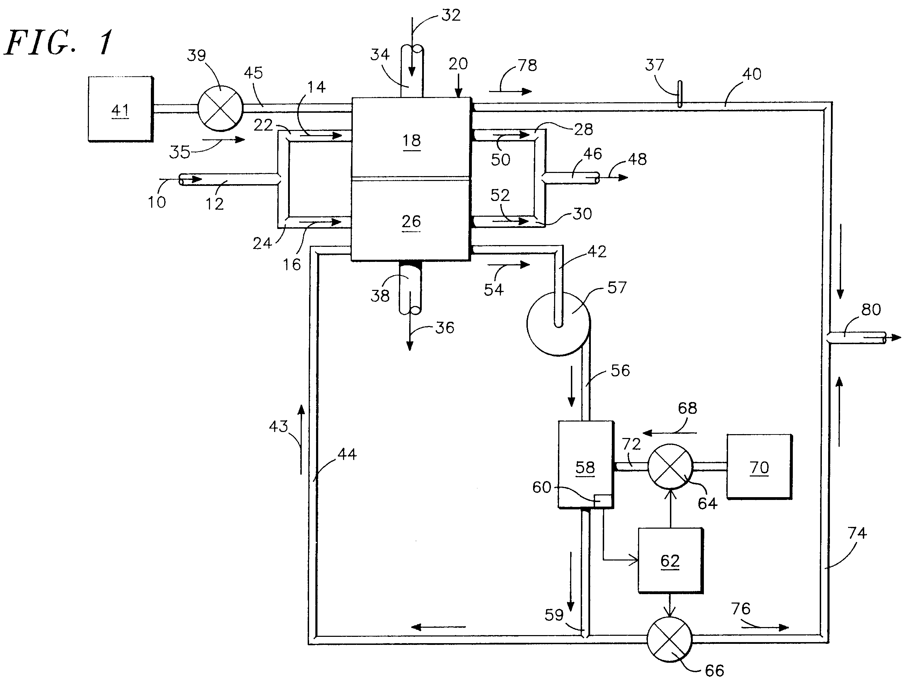

Referring now to FIG. 1, supply air 10, extracted from a living enclosure (not shown), enters an atmospheric conditioning system via an inlet duct 12. Due to human exhalation and perspiration, and the outgassing of electronic potting materials, the supply air 10 contains large amounts of carbon dioxide and water vapor, and trace amounts of other contaminants. These contaminants may include acidic gases; such as sulfur dioxide, hydrogen sulfide, and hydrochloric acid; basic gases; such as ammonia and amines; and organic gases; such as alcohols, ketones, and esters.

When supply air 10 in the inlet duct 12 reaches the system, it is split into two portions 14, 16. The first portion 14 passes into a first segment 18 of a condensing heat exchanger 20 through a first inlet duct 22. Similarly, the second 16 portion of the supply air 10 flows through a second inlet duct 24 to a second segment 26 of the condensing heat exchanger 20. Both the proportion into which the supply air 10 is split and the relative sizes of the first 18 and second 26 segments of the condensing heat exchanger 20 are selected based upon the anticipated ratio of acidic gas to basic gas contaminants in the supply air 10, for reasons which will become apparent hereinafter.

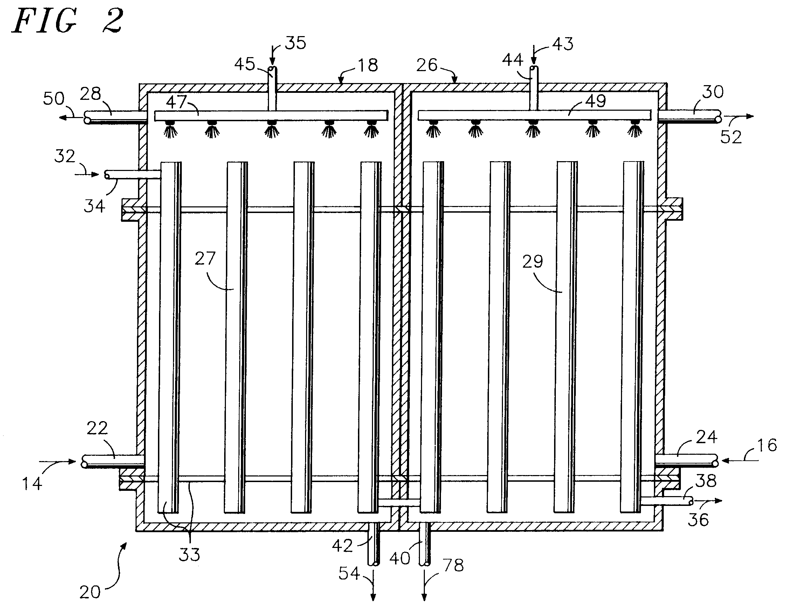

Referring now to FIGS. 1 and 2, the interiors of both segments 18, 26 of the condensing heat exchanger 20 are configured similarly. Air entering the interior of each segment 18, 26 flows over a heat transfer surface 27, 29 before exiting from an outlet 28, 30. These surfaces 27, 29, which may be made from or coated with a hydrophilic material, are oriented such that the greatest possible heat transfer area is exposed to the airstream.

To condense water vapor entrained in the air passing through the condenser segments 18, 26, both heat transfer surfaces 27, 29 are cooled below the dew point of the supply air 10 by a coolant fluid, such as water or Freon (a trademark of E. I. Dupont Co., Inc.). Chilled coolant 32 is delivered from a refrigeration system (not shown) to a coolant inlet duct 34 supplying the condensing heat exchanger 20. Coolant then circulates through a closed fluid passageway 33, thermally communicating with the heat transfer surface. Warmed coolant 36, exiting the system via an outlet 38 connected to the outlet end of this passageway 33, recirculates back to the refrigeration system to be recooled and recycled.

As water vapor entrained in the airstream condenses, it adheres to and wets the heat transfer surfaces 27, 29. Condensate therefore disperses over the heat transfer surfaces 27, 29, offering in each segment 18, 26 an air/condensate interface with considerable surface area. Typically, as the amount of fluid on the heat transfer surfaces 27, 29 accumulates, excess condensate flows into a collection region. Accumulated fluid in this region is then easily collected and delivered to a pair of condensate outlet ducts 40, 42. In applications where gravity is insufficient to draw condensate to a specific collection region, surface air drag is instead used to transport condensate to a collection region. From this collection region, the condensed vapor is either vacuumed or wicked away and delivered to the condensate outlet ducts 40, 42. A condenser in which condensate is removed by vacuuming is described in U.S. Pat. No. 3,868,830.

As the first portion 14 of the supply air 10 passes through the first segment 18 of the condensing heat exchanger 20, water vapor entrained in the air condenses onto the surface 27. Since carbon dioxide, alcohols, ketones, and esters are extremely water-soluble, large quantities of those gases dissolve into the condensate. As the carbon dioxide dissolves into the solution, it reacts with water to form carbonic acid, dropping the pH of the solution. When the pH level of the solution falls below seven, its affinity for soluble basic gases increases. Water-soluble basic gases, such as ammonia and amines, therefore also enter the solution on the heat transfer surface, reacting with the carbonic acid to form ammonium carbonate and carbamate compounds. Accumulating solution is then delivered to the first condensate outlet duct 40.

Should a pH sensor 37 in this first condensate outlet duct 40 indicate that the pH of the condensate solution 78 exiting the first segment 18 has risen above a first predetermined level, typically six, an acid supplement valve 39 opens. Concentrated acidic solution 35, such as a phosphoric acid solution with a pH between three and four, then flows from an acid reservoir 41 into an acid supplement duct 45. Acid solution exiting this acid supplement duct 45 then sprays, through a first collection of nozzles 47, onto the on the heat transfer surface 27 in the first segment 18 of the condensing heat exchanger 20, lowering the pH of the condensate there. Typically, acid injection into the first segment 18 is practiced only when either the levels of carbon dioxide in the supply air 10 fall, or the levels of basic gas in the supply air 10 increase. The acid supplement valve 39 closes when the pH sensor 37 monitoring the first condensate outlet flow 78 indicates that pH has fallen below the first predetermined level.

In the second segment 26 of the condensing heat exchanger 20, water vapor also condenses as the air containing it passes over the heat transfer surface 29. However, in this segment, a basic solution 43 such as potassium carbonate, delivered through a basic supplement duct 44, sprays, through a second collection of nozzles 49, onto the surface 29, mixing with the condensate there. As in the first segment 18, soluble organics dissolve into the basic solution wetting the surface 29. Instead of water-soluble basic gases, however, in this second segment 26 water-soluble acidic gases dissolve in the condensate solution. Dissolved acidic gases, such as carbon dioxide, sulfur dioxide, and hydrochloric acid, then react with the hydroxides in the basic solution, forming carbonates, sulfites, and chlorides, respectively. Similar to the first segment 18, after collection this second segment condensate solution is delivered to the second condensate outlet duct 42.

Scrubbed air 48 exiting the two segments 18, 26 of the condensing heat exchanger 20 through the first 28 and second 30 outlet ducts mixes before flowing, through a duct 46, back to the enclosure. The first portion 50 of this scrubbed air 48 is free of soluble basic and organic gases. Similarly, the second portion 52 is free of soluble acidic and organic gases. Although the level of contamination has been reduced, the combined scrubbed air 48 still contains some soluble acidic and basic gas. However, to maintain the desired humidity level, enclosure air circulates through the system so rapidly that the rates of acidic and basic gas removal equals or exceed the rates at which those gases are produced within the enclosure. In the course of normal dehumidification, then, a sufficient rate of decontamination is maintained, precluding the need for additional acidic and basic gas scrubbing components.

Condensate solution 54 exiting the second segment 26 of the condensing heat exchanger 20 via the second condensate outlet duct 42 is pumped through a duct 56 into an accumulator 58. The accumulator 58 serves as a buffer for the second condensate circulation system, allowing the pump 57 to maintain a constant flow rate through the system, irrespective of fluctuations in the overall basic solution volume in the system. When it exits the accumulator 58, solution then passes through a duct 59 supplying basic aqueous fluid 43 to the basic supplement duct 44. From there, the basic solution re-enters the second segment 26 of the condensing heat exchanger 20, completing its circulation through the system.

The pH of the solution in the accumulator 58, sensed by a pH sensor 60, is passed to an electronic control unit 62. As more and more acidic gas dissolves into the solution and reacts, pH drops. When solution pH falls below a second predetermined level, typically between eight and nine, the controller opens both a basic supplement valve 64 and a bleed valve 66. When the basic supplement valve 64 opens, concentrated basic solution 68, stored in a tank 70, flows, through a duct 72, into the accumulator 58. The basic supplement valve 64 closes when the pH of the solution in the accumulator rises above the second predetermined level. The bleed valve 66 is opened at the same time as the basic supplement valve 64, passing enough solution into a bleed duct 74 to maintain essentially a constant volume of basic solution in the recirculation system. Solution 76 in the bleed duct 74 mixes with the acidified condensate 78 in the first condensate outlet duct 40. The mixture then passes to a storage tank (not shown), via a duct 80, where it is subsequently purified for reuse by the enclosure occupants.

Although the invention has been shown and described with respect to exemplary embodiments thereof, it should be understood by those skilled in the art that various changes, omissions, and additions may be made therein and thereto, without departing from the spirit and scope of the invention.

## Claims

1. A system for removing both water vapor and water-soluble gases from an airstream, comprising:
   condensing heat exchange means having a heat transfer surface contacting said airstream; and
   means for introducing an absorbent solution onto said heat transfer surface.

2. The system according to claim 1 wherein said absorbent solution is an acidic solution.

3. The system according to claim 2 wherein said acidic solution is phosphoric acid.

4. The system according to claim 1 wherein said absorbent solution is a basic solution.

5. The system according to claim 4 wherein said basic solution is potassium carbonate.

6. The system according to claim 1 wherein said introducing means is a collection of spray nozzles directed towards said heat transfer surface.

7. A method for removing both water vapor and water-soluble gases from an airstream, comprising:
   introducing an absorbent solution onto the heat transfer surface of a condensing heat exchanger receiving at least a portion of said airstream.

8. A method for removing both water vapor and water-soluble basic gases from an airstream, comprising:
   introducing an acidic solution onto the heat transfer surface of a condensing heat exchanger receiving at least a portion of said airstream.

9. A method for removing both water vapor and water-soluble acidic gases from an airstream, comprising:
   introducing a basic solution onto the heat transfer surface of a condensing heat exchanger receiving at least a portion of said airstream.

FIG. 1

EP 0 477 129 A1

FIG 2

EP 0 477 129 A1

## European Patent Office

# EUROPEAN SEARCH REPORT

Application Number

EP 91 63 0071

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 712 209 (H. HÖLTER)<br>* the whole document *<br>--- | 1,6,7 | B01D53/00<br>B01D5/00 |
| X | FR-A-2 586 204 (T. TISSANDIER)<br><br>* page 4, line 31 – page 5, line 14; claim 1; figure 1 *<br>--- | 1,2,6,7,8 | |
| D,X | US-A-4 329 320 (CH. VYDRA)<br>* the whole document *<br>--- | 1,6,7 | |
| A | EP-A-0 016 591 (TELLER ENVIRONMENTAL SYSTEMS)<br>* claims 1,3 *<br>--- | 2,3 | |
| A | EP-A-0 211 458 (METALLGESELLSCHAFT)<br>* claim 1 *<br><br>----- | 4,5 | |
| | | | TECHNICAL FIELDS SEARCHED (Int. Cl.5)<br><br>B01D |

The present search report has been drawn up for all claims

| Place of search | Date of completion of the search | Examiner |
|---|---|---|
| THE HAGUE | 16 DECEMBER 1991 | BOGAERTS M.L.M. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)